# EUROPÄISCHE PATENTSCHRIFT

(11) **EP 0 914 925 B1**
(45) Veröffentlichungstag und Bekanntmachung des Hinweises auf die Patenterteilung: **25.01.2006**
(21) Anmeldenummer: 98121016.4
(22) Anmeldetag: 05.11.1998
(51) Int. Cl.: B29C 45/78

(54) **Verfahren zur Temperatur-Regelung einer Spritzgiess- oder Druckgiessform**
Method of controlling the mould temperature
Procédé de régulation de la température de moules

(30) Priorität: 08.11.1997 DE 19749495
(43) Veröffentlichungstag der Anmeldung: 12.05.1999
(73) Patentinhaber: Kotzab, Werner, 97422 Schweinfurt (DE)
(72) Erfinder: Kotzab, Werner, 97422 Schweinfurt (DE)
(74) Vertreter: Rau, Manfred

(56) Entgegenhaltungen:
- DE-A- 1 779 440
- US-A- 4 442 061
- US-A- 4 902 454
- US-A- 5 376 317
- US-A- 5 411 686

## Beschreibung

Die Erfindung richtet sich auf ein Verfahren zur Temperatur-Regelung einer Spritzgieß- oder Druckgießform, wobei mittels wenigstens eines Sensors die jeweilige Temperatur der Gießform erfaßt, mit einem Sollwert verglichen und in Abhängigkeit von einer festgestellten Über- oder Unterschreitung des Sollwertes Kühlflüssigkeit, insbesondere Kühlwasser, durch in der Gießform angeordnete Kühlkanäle dosiert zugeführt wird, wobei für die Regelung auf eine Solltemperatur zwei Temperatur-Schwellen als Schaltschwellen derart vorgegeben werden, dass der einen Schwelle das Öffnen der Ventile zur Dosierung der Kühlflussigkeit und der anderen Schwelle das Schließen der Ventile zugeordnet ist.

Aus der US 4 902 454 A ist ein derartiges Verfahren zum Temperieren einer Spritzgießform bekannt, bei dem mittels eines Sensors die Temperatur einer Gießform erfasst wird und Kühlflüssigkeit durch einen Kühlkanal der Gießform dosiert zugeführt wird. Der Sensor ist derart an der Gießform angeordnet, dass dieser lediglich einen Temperaturpeak nach dem Einspritzen eines heißen, zu spritzenden Materials feststellt. Öffnungs- und Schließzeiträume des Kühlflüssigkeits-Dosierungsventils werden hierbei im Rahmen einer Initialisierungsphase aus dem Temperaturverhalten der Gießform abgeleitet. In der Initialisierungsphase wird in einem ersten Zeit-raum das Kühlflüssigkeits-Dosierungsventil voll geöffnet und in einem zweiten Zeitraum dieses Ventil vollständig geschlossen, wobei die hierdurch erzeugten Temperaturdifferenzen ermittelt und zur Berechnung der Öffnungs- und Schließzeiträume des Ventils herangezogen werden. Ebenso findet eine Temperaturregelung während des eigentlichen Betriebes der Spritzgießvorrichtung bei der US 4 902 454 A durch Öffnen und Schließen der Ventile statt. Nachteilig bei diesem Verfahren ist die mangelhafte Tem-peraturerfassung der Gießform durch den Sensor.

Ein weiteres Verfahren zum Temperieren einer Spritzgieß- oder Druckgießform, bei der Kühlflüssigkeit der Gießform durch einen in dieser angeordneten Kühlkanal zugeführt wird, ist aus der DE-OS 1 779 440 bekannt. Einzelheiten der Temperierung der Gießform werden dort nicht beschrieben.

Die US 5 376 317 A und die US 4 442 061 A beschreiben Spritz- oder Druckgieß-Prozessabläufe, während denen mehrere Solltemperaturen ein-gehalten werden. Wie diese einzelnen Solltemperaturen eingehalten werden, wird in diesen Druckschriften nicht im Detail beschrieben.

Ein anderes bekanntes Temperier-Verfahren wird beschrieben in US 4,354,812 bzw. US 4,420,446, wobei aufgrund einer ermittelten Durch-schnittstemperatur Kühlflüssigkeitsimpulse generiert werden. Der Nachteil dieses Verfahrens besteht darin, daß erst nach mehreren Zyklen eine Temperatur-Korrektur vorgenommen werden kann, wenn sich beispielsweise die Bedingungen im Werkzeug, der Druck oder die Temperatur des Kühlmediums ändert.

Bei einem anderen bekannten Verfahren gemäß DE 43 09 880 werden aufgrund einer Mittelwertbildung am Beginn des Spritz-Zyklus ein Kühlimpuls und zum Ende des Spritz-Zyklus hin eine Mehrzahl von Kühlimpulsen abgegeben. Auch hier ergibt sich der Nachteil, der vorstehend bereits angesprochen wurde, wobei sich die am Zyklusende eingeleiteten Kühlmittelimpulse besonders negativ bemerkbar machen, weil diese einen erhöhten Wärmestrom am Zyklusende zur Folge haben, wodurch sich an der Kavitätsoberfläche im Bereich der dahinter liegenden Kühlkanäle Kältezonen einstellen. Die Schmelze trifft dann auf eine Oberfläche mit unterschiedlichen Temperaturen, wodurch zwangsläufig ein Verzug am Produkt und andere Qualitätsmängel bedingt sind. Vergleichbare Verfahren werden auch in US 5,452,999 und US 5,589,114 beschrieben.

Gemäß einem weiteren bekannten Stand der Technik ist ein Spritzgieß-werkzeug mit drei Sensoren bekannt. Ein Sensor im Kern ist in der Werkzeugwand unmittelbar vor der Kavitätsoberfläche angeordnet. An dieser Stelle wird nach dem Einspritzen des heißen, zu spritzenden Materials ein Anstieg der Temperatur festgestellt und nach einem Kühlmittelimpuls ein kurzzeitiges Absinken. Danach kommt es jedoch erneut zu einem Tempe-raturanstieg, welcher durch die von außen kommende Wärme bedingt ist. Dementsprechend muß bei diesem bekannten Verfahren, jedesmal wenn die eingestellte Solltemperatur überschritten wird, ein zweimaliges Kühlen vorgesehen werden. Dies kann dazu führen, daß die Werkzeugoberflächentemperatur deutlich unter die eingestellte Solltemperatur absinkt und erst nach einem oder mehreren Zyklen wieder den für die optimale Verarbeitung erforderlichen Sollwert erreicht. Dieser Vorgang kann sich periodisch wiederholen. Bei diesem bekannten Verfahren ist ebenfalls ein zweiter Sensor nahe dem Anguß angeordnet, der wiederum ebenfalls sehr nahe an der Kavität angeordnet ist. Hier kommt es beim Regelungsvorgang bei gleicher Solltemperatur zu der Situation, daß der Sensor eine Temperaturerhöhung registriert, bei Erreichen der Solltemperatur bzw. deren Überschreiten eine Ventilöffnung auslöst, so daß ein Kühlmittelimpuls abgegeben wird, und das Ventil erst wieder bei Unterschreiten dieser Temperatur schließt. Da der korrespondierende Kühlkanal unter Umständen weit ent-fernt angeordnet ist, kann der Wärmedurchgang vom Kühlkanal zum Sensor nicht zyklussynchron verlaufen, wodurch der Wärmeentzug durch den Kühlimpuls zu spät erkannt wird, und wodurch wiederum die Solltempetur stark unterschritten wird, so daß erst nach mehreren Zyklen die vorgegebene Solltemperatur wieder erreicht wird.

Hiervon ausgehend liegt der Erfindung die Aufgabe zugrunde, ein Verfah-ren anzugeben, welches ein starkes Über- oder Unterschwingen der Temperatur relativ zur Solltemperatur vermeidet und eine optimale Temperierung der Spritzgieß- oder Druckgießform gewährleistet.

Diese Aufgabe wird erfindungsgemäß dadurch gelöst, daß der wenigstens eine Sensor relativ zu den Kühlkanälen bzw. zur Formausnehmung bzw. zur Außenwand des Formwerkzeugs so angeordnet ist, daß während eines Spritzzyklus aufeinanderfolgende Temperaturpeaks unterschiedlicher Höhe gemessen werden, wobei die Temperatur-Schwellen einen derartigen Abstand Δt und einen derartigen Absolutwert bezogen auf den jeweils gemes-senen niedrigeren Temperaturpeak P2 aufweisen, daß der Temperaturpeak P2 unter der Schaltschwelle t_{zu} für das Schließen des jeweiligen Ventils liegt.

Das erfindungsgemäße Verfahren hat den Vorteil, daß ein Überschwingen der Werkzeugwand-Temperaturen vermieden wird und trotzdem mit einem einfachen Regelalgorithmus gearbeitet werden kann, in welchen sowohl manuell als auch automatisch eingegriffen werden kann. Es wird eine optimale Temperierung selbst bei sehr ungünstigen Verhältnissen im Spritzgießwerkzeug, z.B. bei besonders großen oder kleinen Abständen zwischen Sensor und Kühlkanälen, erzielt.

Eine weitere vorteilhafte Ausgestaltung ergibt sich aus dem Unteranspruch.

Nachfolgend wird die Erfindung anhand eines bevorzugten Ausführungsbeispieles in Verbindung mit der Zeichnung näher erläutert. Dabei zeigen:
- Fig. 1: eine schematische Darstellung eines Spritzgießwerkzeugs mit Temperiereinrichtung und drei Regelkreisen mit je einem Sensor S1, S2, S3,
- Fig. 2: eine Darstellung der Schaltschwellen und des Temperaturverlaufs am Sensor S2,
- Fig. 3: eine Darstellung der Schaltschwellen und des Temperaturverlaufs am Sensor S3, der im Kühlkanal angeordnet ist und
- Fig. 4: eine Darstellung von Schaltschwellen und Temperaturverlauf bei einem Sensor, der nacheinander innerhalb eines Spritzzyklus von einer größeren Wärmemenge und nachfolgend von einer kleineren Wärmemenge beaufschlagt wird, wie dies beispielsweise am Sensor S1 zu beobachten ist.

In Fig. 1 ist ein Spritzgießwerkzeug 1 mit einer Formausnehmung 2 und einer Mehrzahl von Kühlkanälen 3 dargestellt.

20 Über eine Steuer- und Regeleinrichtung 4 wird eine Ventilanordnung 5 für die Kühlkanäle durchströmende Kühlflüssigkeit gesteuert.

Ein erster Sensor S1 ist in einem Abstand A parallel zu einem Kühlkanal 3 und parallel zu der Formausnehmung 2 angeordnet. Ein zweiter Sensor S2 25 befindet sich in einem Abstand B von Kühlkanälen 3. Ein dritter Sensor S3 ist im Kühlkanal angeordnet.

Bei Regelverfahren, wie sie aus dem Stand der Technik bekannt sind und wie sie einleitend beschrieben wurden, stellt sich bei den angesprochenen Sensoren folgendes Problem:

Am Sensor S1 werden zwei Temperaturpeaks festgestellt, die aus zwei Wärmewellen resultieren, wobei jeweils eine unterschiedliche Wärmemenge zugeführt wird. Der erste Temperaturpeak ergibt sich aus der senkrecht verlaufenden Wand, wohingegen der zweite Temperaturpeak aus der Wandstärke resultiert, welche dem Abstand A entspricht. Diese zweite Temperaturerhöhung wird bei herkömmlichen Verfahren von dem Sensor S1 überbewertet, was zu Regelfehlern führt.

Bei dem Sensor S2 ist der Abstand zwischen Sensor S2 und Kühlkanal 3 größer als der Wärmedurchgang pro Zyklus, wodurch der Sensor S2 die Wärmeabfuhr aufgrund des jeweiligen Kühlimpulses zu spät registriert und das zugeordnete Ventil bei herkömmlichen Verfahren dementsprechend zu spät geschlossen wird.

Bei dem im Kühlkanal angeordneten Sensor S3 wird die Temperaturerhö-hhung zu spät erkannt, so daß auch hier pro Zyklus gemäß dem Stand der Technik zu viel Wärme abgeführt wird und die Temperatur deshalb nach dem Schließen des Ventils unter die Solltemperatur absinkt.

Diese vorstehend beschriebenen Nachteile vermeidet das erfindungsgemäße Verfahren, wie nachfolgend unter Bezugnahme auf die Figuren 2 bis 4 beschrieben wird:

In Fig. 2 ist der Temperaturverlauf am Sensor S2 dargestellt. Es sind zwei um eine Temperaturdifferenz Δt voneinander beabstandete Schaltschwellen t_{auf} und t_{zu} vorgesehen, wobei das Überschreiten der oberen Schaltschwelle das Öffnen und das Unterschreiten der unteren Schaltschwelle das Schlie-ßen des Ventils des jeweiligen Kühlkanals bewirkt. Hierdurch ergibt sich eine an den Kühlkanalabstand angepaßte Regelung, wobei der Abstand Δt für jedes Spritzgießwerkzeug und jeden dort vorgesehenen Temperaturfühler individuell einstellbar ist.

In Fig. 3 ist der Temperaturverlauf am Sensor S3 im Kühlkanal 3 dargestellt. Es sind hier wiederum zwei Schaltschwellen t_{auf} und t_{zu} mit einem Abstand Δt vorgesehen, wobei jedoch im Unterschied zu Fig. 2 die für das Öffnen des Ventils zuständige Schaltschwelle t_{auf} tiefer liegt als die für das Schließen des Ventils zuständige Schaltschwelle t_{zu}. Dementsprechend wird hier das jeweilige Ventil aus der Ventilanordnung 5 frühzeitig geöffnet und dementsprechend eine zyklische Wärmeabfuhr realisiert.

Fig. 4 betrifft die Situation am Temperatursensor S1, wo - wie bereits erwähnt - zwei Temperaturpeaks P1 und P2 auftreten. Es sind wiederum zwei Schaltschwellen vorgesehen mit einem Abstand Δt. Die tiefer liegende Schaltschwelle t_{auf} ist diejenige zum Öffnen des Ventils, die höher liegende Schwaltschwelle t_{zu} ist diejenige zum Schließen des Ventils. Es ist erkennbar, daß die absolute Höhe und der Abstand der Temperaturschwellen t_{auf} und t_{zu} so gewählt ist, daß der zweite Peak P2 nicht zu einem nochmaligen Öffnen bzw. Schließen des jeweiligen Ventils führt, so daß hierdurch Überschwingvorgänge vermieden werden.

In Fig. 4 ist eine Variante des erfindungsgemäßen Verfahrens dargestellt, wo die zweite Schaltschwelle nicht durch den Absolutwert der Temperatur festgelegt ist, sondern durch den Ablauf eines festgelegten Zeitintervalls tₛ nach Überschreiten der ersten Schaltschwelle. Dieses Zeitintervall kann für den individuellen Anwendungsfall entsprechend vorgegeben werden.

## Patentansprüche

1. Verfahren zu Temperatur-Regelung einer Spritzgieß- oder Druckgießform (1), wo-bei mittels wenigstens eines Sensors (S1) die jeweilige Temperatur der Gießform erfaßt, mit einem Sollwert verglichen und in Abhängigkeit von einer festgestellten Über- oder Unterschreitung des Sollwertes Kühlflüssigkeit (3), insbesondere Kühlwasser, durch in der Gießform angeordnete Kühlkanäle dosiert zugeführt wird, wobei für die Regelung auf eine Solltemperatur zwei Temperatur-Schwellwerte t_{auf}, t_{zu} derart vorgegeben werden, daß dem einen Schwellwert t_{auf} das Öffnen der Ventile zur Dosierung der Kühlflüssigkeit und dem anderen Schwellwert t_{zu} das Schließen der Ventile zugeordnet ist, **dadurch gezennzeichnet, daß** der wenigstens eine Sensor (S1) relativ zu den Kühlkanälen bzw. zur Formausnehmung bzw. zur Außenwand der Gießform so angeordnet ist, daß während eines Spritzzyklus aufeinanderfolgende Temperaturpeaks P1,P2 unterschiedlicher Höhe gemessen werden, wobei die Temperatur-Schwellwerte, t_{auf}, t_{zu} einen derartigen .Abstand Δt und einen derartigen.Absolutwert bezogen auf den jeweils gemessenen niedrigeren Temperaturpeak P2 aufweisen, daß der Temperaturpeak P2 unter dem Schaltschwellwert t_{zu} für das Schließen des jeweiligen Ventils liegt.

2. Verfahren nach Anspruch 1, **dadurch gekennzeichnet, daß** der zweite höhere oder niedrigere Temperatur-Schwellwert dadurch vorgegeben ist, daß er durch ein bestimmtes vorgebbares Zeitintervall nach Über- oder Unterschreiten des ersten Temperatur-Schwellwertes bestimmt ist.

## Claims

1. A method of controlling the temperature of an injection or diecasting mold (1), the respective temperature of the mold (1) being detected by at least one sensor (S1) and compared to a set point and coolant, in particular cooling water, being metered and added through cooling channels disposed in the mold in dependence on detected overshooting or undershooting of the set point, wherein for the regulation to a pre-set temperature two temperature thresholds tₒₚₑₙ, t_{closed} are pre-set so that opening the valves for metering the coolant is allocated to one threshold tₒₚₑₙ and closing the valves to the other threshold t_{closed}, **characterized in that** the at least one sensor (S1) is disposed relatively to the cooling channels and the mold cavity and the outer wall of the mold, respectively, such that successive temperature peaks P1, P2 of varying height are measured during an injection cycle, wherein the temperature thresholds tₒₚₑₙ, t_{closed} have a distance At and an absolute value referred to the respectively measured lower temperature peak P2 such that the temperature peak P2 is below the switching threshold t_{closed} for the closing of the respective valve.

2. A method according to claim 1, **characterized in that** the second, higher or lower temperature threshold is given by being defined by a certain time interval, to be pre-set, after the overshooting or undershooting of the first temperature threshold.

## Revendications

1. Procédé pour la régulation de température d'un moule à injection ou d'un moule à injection sous pression (1), où la température respective du moule (1) est saisie au moyen d'un senseur (S1) au moins, comparée à une valeur de consigne et où du liquide réfrigérant, notamment de l'eau de refroidissement, est alimenté par dosage dans des canaux de refroidissement (3) disposés dans le moule, en fonction d'un écart en plus ou en moins constaté par rapport à la valeur de consigne, deux valeurs-seuils tₒᵤᵥₑᵣₜ, t_{fermé} étant prescrites pour la régulation à une température de consigne de manière que l'ouverture des vannes de dosage du liquide réfrigérant relève de la première valeur-seuil tₒᵤᵥₑᵣₜ et que la fermeture des vannes relève de la deuxième valeur-seuil t_{fermé}, **caractérise en ce qu'**au moins un senseur (S1) est disposé relativement aux canaux de refroidissement ou à la cavité de forme ou à la paroi extérieure du moule de manière que des crêtes de températures successives P1, P2 de niveau différent soient mesurées pendant un cycle d'injection, les valeurs-seuils de température tₒᵤᵥₑᵣₜ, t_{fermé} présentant un tel écart △t et une telle valeur absolue par rapport à la crête de température plus basse P2 respectivement mesurée, que la crête de température P2 soit située en dessous de la valeur-seuil de commutation t_{fermé} pour la fermeture de la vanne correspondante.

2. Procédé selon la revendication 1, **caractérisé en ce que** la deuxième valeur-seuil de température plus haute ou plus basse est prescrite en étant déterminée par un intervalle temporel défini prescriptible après le dépassement ou le sous-dépassement de la première valeur-seuil de température.
